# EUROPEAN PATENT SPECIFICATION

(11) **EP 1 101 921 B1**
(45) Date of publication and mention of the grant of the patent: **17.12.2008**
(21) Application number: 00122747.9
(22) Date of filing: 19.10.2000
(51) Int. Cl.: F02F 1/38, F01N 3/34

(54) **Cylinder head for a multi-cylinder in-line combustion engine having a secondary air supply system**
Zylinderkopf für eine Mehrzylinderreihenbrennkraftmaschine mit einem Sekundärluftsystem
Culasse pour un moteur à combustion interne avec plusieurs cylindres rangés en ligne , avec un système d'admission de l'air secondaire

(30) Priority: 17.11.1999 GB 9927087
(43) Date of publication of application: 23.05.2001
(73) Proprietor: Bayerische Motoren Werke Aktiengesellschaft, 80809 München (DE)
(72) Inventor: Temmesfeld, Axel, 83233 Bernau (DE); O'Reilly, Brian, 80939 München (DE)

(56) References cited:
- EP-A- 0 701 048
- DE-A- 4 445 490
- DE-C- 4 106 499
- FR-A- 2 723 615
- US-A- 3 690 105
- US-A- 5 839 417

## Description

The invention relates to a cylinder head for a multi-cylinder in-line combustion engine having a secondary air supply system, comprising a longitudinal channel provided with a secondary air supply by a valve, from which longitudinal channel lead stub-lines to each cylinders' exhaust channels, which flow through the cylinder head into a flange mounted exhaust gas manifold, where at least two separately carried exhaust gas manifolds, as regards the gas flow, are provided. For each respectively the exhaust channel is connected to at least two cylinders. The technical field is shown in DE 44 45 971, DE 4 106 499 and in particular in DE 195 31 875 C1.

The later document shows a combustion engine cylinder head with the known features of the pre-characterizing portion of claim 1. Basically it shows a cylinder head of the kind set forth in which secondary air for treatment of the exaust gas is supplied to the aligned cylinders of the combustion engine in a particularly manner by flow through a longitudinal channel running through the cylinder head. With such a longitudinal channel costly arrangements for the distribution of the secondary air supply outside of the cylinder head can be avoided.

One such distribution pipe system for the secondary air supply arranged outside of the cylinder head is shown in the the first-noted document above. There, a secondary air pump feeds pipes, via a valve, the desired secondary air stream to one of the cylinder exhaust channels leading to the secondary air supply each of the pipes being provided with an independant individual valve. In this way an exact control of the secondary air supply is possible, i. e. in each exhaust channel the secondary air flow will only occur, if combustion engine exhaust gas also flows in these channels.

With known independant valves in individual secondary air pipes, advantageously a problem does not occur, which is observed in the prior art of DE 195 31 875 C1.

Over the aforementioned longitudinal channel all of the cylinder exhaust chambers are connected together, so that this longitudinal passage may operate as a connecting region between the exhaust channels. Each such connecting region degrades the gas dynamics in the exhaust system of the combustion engine. Moreover, the longitudinal passages, as a result of the making of the connection, will at the same time unnecessarily heat up the exhaust channels. Further, a similar distribution for the dispersion of the secondary air flow to the individual exhaust passages is in this way unlikely to be attainable.

A secondary air system is desired in which the construction is essentially as simple as in the generic construction of DE 195 31 875 C1, but contains no inconvenient or undesireable connections. In particular, there should be no expense incurred in arranging the secondary air pipes outside of the cylinder head.

A cylinder head for an in-line combustion engine in which these requirements are made forms the basis for the present invention.

The solution to the problem is characterized in that the longitudinal passage is divided into a number of sub-channels, the number being the same as the number of exhaust manifolds, such that a gas path from the said valve to the respective seperate sub-channels of the individual exhaust gas manifolds is such that each sub-channel is joined by way of the exhaust gas manifold to supply the cylinder exhaust gas channel with secondary air. Advantageous constructions and details are described in the subsidiary claims.

The present invention is based on the realisation that with regard to the gas paths of the respective seperate exhaust gas manifolds, usually, at least two are provided. The manifolds are normally secured to the side of the cylinder head and are combined with the cylinder exhaust channels of the respective cylinders. However, this is relatively harmless, as the exhaust channels of the different cylinders will be normally be connencted together to an exhaust manifold, dependent upon the ignition sequence of the combustion engine cylinder. For example, in the case of a 4 cylinder combustion engine - if the sequentially arranged cylinders are numbered in an ascending sequence -, the first and forth cylinders are brought together in a first exhaust manifold and the second and the third cylinders in a second exhaust manifold. In a 6 cylinder combustion engine, the exhaust channels of cylinders no. 1 to 3 may be combined in a first exhaust manifold and the exhaust channels of cylinders no. 4 to 6 are combined in a second exhaust manifold.

In accordance with the invention, the longitudinal channel serving the secondary air supply should be divided into as many sub-channel as are provided exhaust gas manifolds, whereby each sub-chamber is associated with an exhaust gas manifold. In relation to the (both or more) exhaust gas manifold(s), the associated exhaust gas channel then provides each with the secondary air distribution serving the sub-channel just like a connection. However, a similar connection is present through the exhaust gas manifold, such that through this sub-channel no (additional) detrimental effect is provided. However, this is achieved by a relatively simple construction, since the division of the longitudinal channels in the cylinder head of an in-line engine can simply be realized, for example if this division is by way of insertion of a suitably shaped insertion element, positioned in the longitudinal channel. By way of example, the inserted element may be formed as a pipe spaced and separated along its length from the wall of the longitudinal channel such that the first sub-channel is constructed through the pipe innerspace and the second sub-channel is constructed through the space between the tube wall and the wall of the longitudinal channel.

The following will make more clear a preferred embodiment of the invention. The accompanying Fig. 1 shows a longitudinal cross section through a cylinder head of a four cylinder in-line combustion engine, while Fig. 2a and 2b show a somewhat simplified exhaust manifold of a cylinder head of a four cylinder and six cylinder combustion engine; Fig. 3 shows a perspective view of a preferred insertion element in the form of a tube.

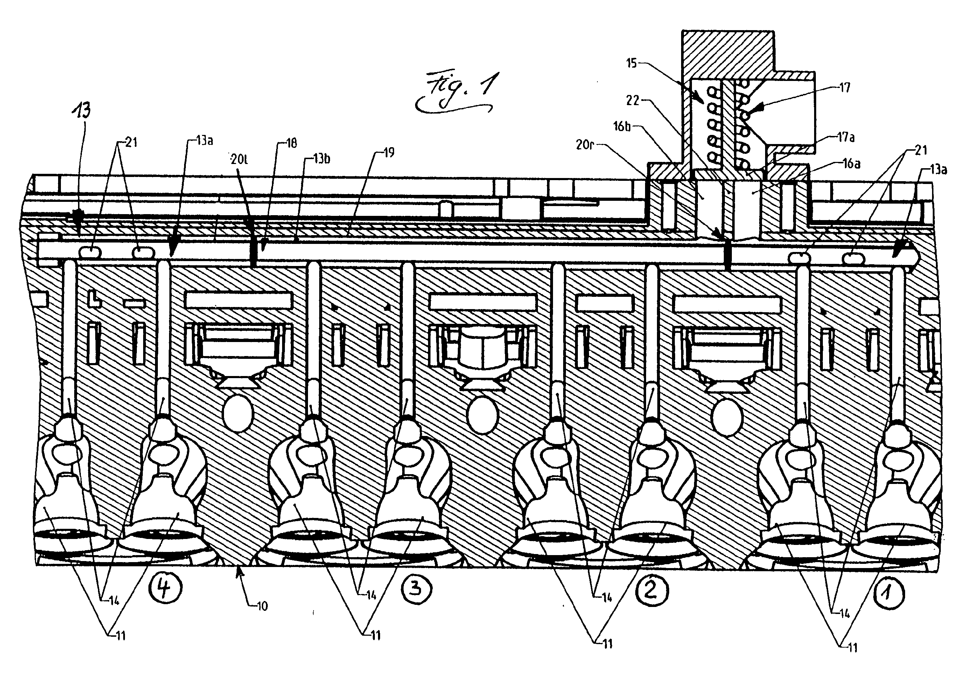

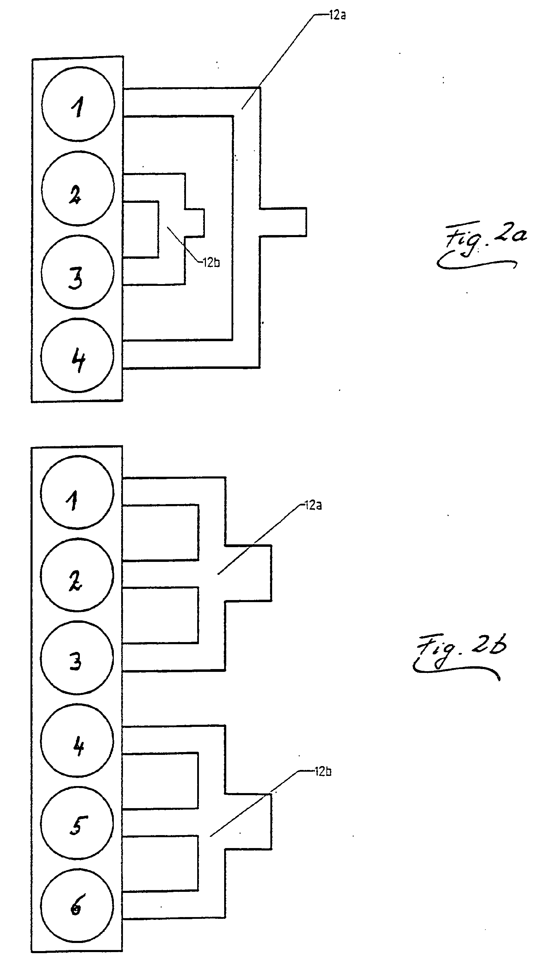

A cylinder head of a 4 cylinder (Fig. 1, 2a) or 6 cylinder (Fig. 2b) piston in-line combustion engine is shown at reference no. 10, in which individual cylinders are arranged, reference nos. 1 to 4 or 1 to 6. As is usual in such cylinders, a combustable mixture is ignited, after which the exhaust gas is introduced into the cylinder exhaust channel 11. At the same time the exhaust channels of several cylinders are brought together in exhaust manifolds 12a, 12b, which are mounted to one side of the cylinder head 10. For example, in the 4 cylinder combustion engine of Figures 1 and 2a the exhaust channels of cylinders 1 and 4 are brought together in the first exhaust manifold 12a and those of cylinders 2 and 3 in a second exhaust manifold 12b. In the 6 cylinder combustion engine of Fig. 2b the exhaust channels of cylinders 1, 2 and 3 are brought together in a first exhaust manifold 12a and those of cylinders 4, 5 and 6 in a second exhaust manifold 12b. Exhaust manifolds 12a, 12b are linked in a known manner to the exhaust chamber of the combustion engine (not shown here).

Fig. 1 shows that cylinders 1 to 4 are each provided with two exhaust channels 11. However, this is not essential for the present invention. It is more important, that in the cylinder head 10 there runs a longitudinal channel 13 by which a secondary air supply is introduced into the exhaust channels for subsequent treatment. From longitudinal channel 13 branch off so called stub lines 14 which likewise operate inside of the cylinder head 10, and flow into respective exhaust channels 11.

The desired secondary air stream is fed through a supply line 15 to cylinder head 10 and fed over (here two) parrallel tapped channels 16a, 16b into the longitudinal channel 13. In the passage of the supply line 15 into the tapped channels 16a, 16b there is provided a valve 17, here comprising a pilot valve 17. By greater or lesser opening of the valve 17 a secondary air pump (not shown) by way of supply line 15 introduces secondary air flow through tapped channels 16a, 16b into the longitudinal channel 13, while by closing valve 17 the connection between the supply line 15 and the tapped channels 16a, 16b is broken. In this way the valve 17 is constructed and arranged so that the valve head 17a of this valve 17 has a closed position which interrupts the connection existing between the tapped channels 16a, 16b when the valve head is in an open position. This situation occurs as described such that the tapped channels 16a, 16b of the valve 17 at least as far as the gas flow is concerned are isolated from one another (that is in relation to the down-stream secondary air flow).

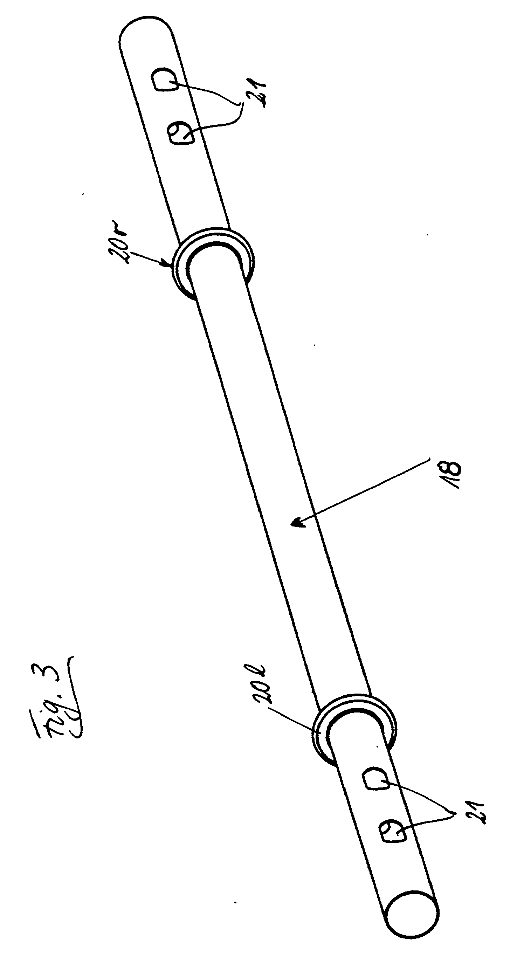

The flow in the cylinder head 10 of the secondary air flow to the exhaust channel 11 through the longitudinal channel 13 is sub-divided by way of the so called insert element 18 into a first sub-channel 13a and a second sub-channel 13b. As is evident, this insert element 18 comprises a pipe which is spaced and separated along its length from the wall 19 of the longitudinal channel 13 which will be given the reference no. 18 in the following, and in Fig. 3 this element is shown again but from a different perspective. This pipe is arranged in such a way to be concentic within longitudinal channel 13, such that the first sub-channel 13a extends substantially through an innerspace of the pipe and the second sub-channel 13b through at least a section of the space between the pipe wall (not shown with a separate reference no.) and the wall 19 of the longitudinal channel 13.

As clearly shown here the pipe extends essentially the whole length of the longitudinal channel 13. In the region between the first cylinder 1 and the second cylinder 2 as well as in the region between the third cylinder 3 and the forth cylinder 4 respective shoulders 201 and 20r extend from pipe 18 to the wall 19 of the longitudinal channel 13. The second sub-channel 13b is disposed within the section of the longitudinal channel 13 between the pair of shoulders 201 and 20r so as to be between the pipe wall and the wall 19. The first part of sub-channel 13a comprising the section of the longitudinal channel 13 lying on the right hand side of the right shoulder 20r and the second part comprising the section of the longitudinal channel 13 lying on the left hand side of the left shoulder 201 are connected by way of the pipe innerspace, i. e. adjoining a pipe innerspace through that region of the longitudinal channel 13 which does not comprise the second sub-channel 13b.

Thus, there is a first flow from valve 17 by way of connecting tapped channels 16a in the region of the first cylinder 1 in the longitudinal channel 13 (and thus in sub-channel 13a) while a second flow exists from valve 17 and associated tapped channel 16b in the region between the two shoulders 201 and 20r in the longitudinal channel 13 and thus in the second sub-channel 13b. In this way, as is clear, pipe 18 is provided at both its end regions, i. e. respectively in the region of the first cylinder 1 and the forth cylinder 4, with at least one exchange opening 21, i. e. in these said end regions the tube wall is provided with at least one exchange opening 21 which makes possible a gas exchange from the pipe innerspace in the space between the pipe-wall and the wall 19 of the longitudinal channel 13 (or vice versa).

The function of the pipe 18 is described (or equivalent insert element 18) is as follows;

By opening the valve 17 the desired introduction of a secondary air flow in the cylinder head 10 is induced. The induced flow of the second tapped channel 16b flows directly to the second sub-channel 13b and from this flows out from the area of this sub-channel 13b to the stub lines 14 in the exhaust channels 11 of the second cylinder 2 and the third cylinder 3.

The secondary air supply induced over the first tapped channel 16a however, reaches the right collar 20r located in the region of the longitudinal channel 13, i. e. in the region of the longitudinal channel 13 associated with the first cylinder 1 and likewise in the first part channel 13a. In this region of the sub-channel 13a a portion of the secondary air flow extends over the stub lines 14 provided in the exhaust channel of the first cylinder 1. It can further be seen that a part of the secondary air flows over the (right hand side, here both) exchange openings 21 into the pipe innerspace and flows to the oppositely disposed pipe end, i. e. to the left hand side of the section of pipe 18 associated with the forth cylinder 4. There, the secondary air flow portion exchanges at the provided (left hand side, here both) exchange openings 21 to the left hand side of the left collar 211 of the longitudinal channel 13. This portion of the secondary air flow is always in the first sub-channel 13a. From here the secondary air flow portion flows over the disposed stub line 14 into the exhaust channels 11 associated with the forth cyllinder 4.

As the foregoing description has made clear, it is by way of sub-channel 13a that a secondary air flow is delivered to cylinders 1 and 4, with regard to the gas flow downstream of valve(s) 17 absolutely separated from sub-channel 13b through which secondary air flow to cylinders 2 and 3 is provided. By closing valve 17, if the valve plate 17a covers a dividing web, shown at reference no. 22 between the two tapped channels 16a, 16b, and while in sub-channels 13a, 13b naturally exhaust gas from the sequential cylinders is located, no exhaust gas from the sub-channel 13a can reach sub-channel 13b (and vice versa). This means that the gas dynamics in the exhaust channels 11 through the respective sub-channels 13a to 13b are not disturbed by secondary air flow through longitudinal channel 13, and that only cylinders 1 and 4 respectively and 2 and 3 respectively are connected by sub-channels 13a and 13b, which in any case are already connected respectively by exhaust manifolds 12a and 12b. The flow dynamics are such that the exhaust channel 11 of the first cylinder 1 and the forth cylinder 4 together with the exhaust manifold 12a and the part channel 13a form a first closed system, and a second closed system is formed by the exhaust channels 11 of the second cylinder 2 and the third cylinder 3 together with the exhaust manifold 12b and sub-channel 13b which is completly separated from the first closed system by the closed valve 17.

Clearly alternative exhaust gas arrangement in which the tapped channel 16a allows flow to the left of the left hand collar 201 disposed within the longitudinal channel 13, formed as above but with a number of construction details differing from the example shown is possible without departing from the scope of the patent claims.

Reference no. list
- No. 1: first cylinder
- No. 2: second cylinder
- No. 3: third cylinder
- No. 4: forth cylinder
- No. 5: fifth cylinder
- No. 6: sixth cylinder
- No. 10: cylinder head
- No.11: exhaust channel
- No.12a, 12b: exhaust gas manifold
- No. 13: longitudinal channel
- No. 13a, 13b: sub channels
- No. 14: stub channel
- No. 15: supply line
- No. 16a, 16b: tapped channels
- No. 17: valve
- No. 17a: valve head
- No. 18: pipe, insert element
- No. 19: wall of 13.
- No. 20l: (left hand side) shoulder (of tube 18)
- No. 20r: (right hand side) shoulder (of tube 18)
- No. 21: exchange opening
- No. 22: web

## Claims

1. Cylinder head of a multi-cylinder in-line combustion engine with a secondary air system, comprising a longitudinal channel (13) supplied with secondary air by a valve (17), from which longitudinal channel (13) lead stub channels (14) of cylinder exhaust channels (11), which themselves flow into flange mounted exhaust gas manifolds (12a, 12b), whereby at least as regards the gas flow there are at least two separate exhaust gas manifolds (12a, 12b) in which the respective exhaust channels (11) of at least two of the cylinders (1 and 4, 2 and 3) are brought together, is **characterized in that** the longitudinal channel (13) is divided into a number of sub-channels (13a, 13b), the number being the same as the number of gas manifolds (12a, 12b), whereby as regards the respective gas flows from said valve (17) there are provided separate sub-channels (13a, 13b) to the individual exhaust gas manifolds (12a, 12b) so that each sub-channel (13a, 13b) provides the exhaust manifolds (12a, 12b) with secondary air by way of the connected cylinder exhaust gas channels (11).

2. Cylinder head according to claim 1, **characterized in that** the longitudinal channel (13) is devided by way of an insert element (18) into the sub-channels (13a, 13b).

3. Cylinder head according to claim 2, **characterized in that** the insert element (18) comprises a pipe (18) which is spaced and separated along its length from the wall (19) of the longitudinal channel (13), so that the first sub-channel (13a) essentially extends through the innerspace of the pipe and the second sub-channel (13b) through at least a section of the space between the pipe wall and the wall of the longitudinal channel (13).

4. Cylinder head according to claim 3, for a 4 cylinder combustion engine, whereby the exhaust channels (11) of the first and forth cylinders (1 and 4) and the exhaust channels (11) of the second and third cylinders (2 und 3) are connected together, and whereby said valve (17) is connected to a first tapped channel (16a) and a second tapped channel (16b), **characterized in that** the pipe (18) extends over the length of the longitudinal channel (13), and in the regions between the first and the second cylinders (1 and 2) and between the third and forth cylinders (3 and 4) respectively are defined respective sealing collars (20l, 20r) extending to the wall (19) of the longitudinal channel (13), and **in that** the second of the tapped channels (16b) of said valve (17) leads to the region between the two collars (20l, 20r) in the longitudinal channel (13), and **in that** the first of the tapped channels (16a) leads from said valve (17) into the longitudinal channel (13) in the region of the first or the forth cylinders (1 or 4), whereby in this region as in the other end region of the pipe (18) at least one exchange opening (21) is provided in the pipe wall.

## Patentansprüche

1. Zylinderkopf eines Mehrzylinder-Reihenverbrennungsmotors mit einem Sekundärluftsystem, der einen Längskanal (13) umfasst, welcher von einem Ventil (17) mit Sekundärluft versorgt wird, wobei von dem Längskanal (13) Kanalstümpfe (14) der Zylinderabgaskanäle (11) führen, die wiederum in flanschmontierten Abgaskrümmern (12a, 12b) münden, wobei mindestens hinsichtlich des Gasstroms mindestens zwei getrennte Abgaskrümmer (12a, 12b) vorgesehen sind, in denen die jeweiligen Abgaskanäle (11) von mindestens zwei der Zylinder (1 und 4, 2 und 3) zusammengebracht sind,
**dadurch gekennzeichnet, dass** der Längskanal (13) in eine Anzahl von Unterkanälen (13a, 13b) unterteilt ist, wobei die Anzahl gleich der Anzahl der Abgaskrümmer (12a, 12b) ist, wobei hinsichtlich der jeweiligen Gasströme von dem Ventil (17) getrennte Unterkanäle (13a, 13b) zu den einzelnen Abgaskrümmern (12a, 12b) vorgesehen sind, so dass jeder Unterkanal (13a, 13b) die Abgaskrümmer (12a, 12b) über die verbundenen Zylinderabgaskanäle (11) mit Sekundärluft versorgt.

2. Zylinderkopf nach Anspruch 1, **dadurch gekennzeichnet, dass** der Längskanal (13) durch ein Einsatzelement (18) in die Unterkanäle (13a, 13b) unterteilt ist.

3. Zylinderkopf nach Anspruch 2, **dadurch gekennzeichnet, dass** das Einsatzelement (18) ein Rohr (18) umfasst, das entlang seiner Länge von der Wand (19) des Längskanals (13) beabstandet und getrennt ist, so dass sich der erste Unterkanal (13a) im Wesentlichen durch den Innenraum des Rohrs und der zweite Unterkanal (13b) durch mindestens einen Abschnitt des Raums zwischen der Rohrwand und der Wand des Längskanals (13) erstreckt.

4. Zylinderkopf nach Anspruch 3 für einen VierZylinder-Verbrennungsmotor, wobei die Abgaskanäle (11) des ersten und des vierten Zylinders (1 und 4) und die Abgaskanäle (11) des zweiten und des dritten Zylinders (2 und 3) miteinander verbunden sind und wobei das Ventil (17) mit einem ersten mit einem Gewinde versehenen Kanal (16a) und einem zweiten mit einem Gewinde versehenen Kanal (16b) verbunden ist, **dadurch gekennzeichnet, dass** sich das Rohr (18) über die Länge des Längskanals (13) erstreckt und in den Bereichen zwischen dem ersten und dem zweiten Zylinder (1 und 2) bzw. zwischen dem dritten und dem vierten Zylinder (3 und 4) jeweilige Dichtungsmanschetten (201, 20r) definiert sind, die sich zur Wand (19) des Längskanals (13) erstrecken, und dass der zweite der mit einem Gewinde versehenen Kanäle (16b) des Ventils (17) zu dem Bereich zwischen den beiden Manschetten (201, 20r) im Längskanal (13) führt und dass der erste der mit einem Gewinde versehenen Kanäle (16a) von dem Ventil (17) in den Längskanal (13) im Bereich des ersten oder des vierten Zylinders (1 oder 4) führt, wobei in diesem Bereich wie im anderen Endbereich des Rohrs (18) mindestens eine Austauschöffnung (21) in der Rohrwand vorgesehen ist.

## Revendications

1. Culasse d'un moteur à combustion interne à plusieurs cylindres en ligne, équipé d'un système d'alimentation en air secondaire comprenant un canal longitudinal (13) recevant de l'air secondaire par l'intermédiaire d'une vanne (17) et à partir de laquelle le canal longitudinal (13) est relié à des éléments (14) des canaux d'échappement (11) des cylindres arrivant eux-mêmes dans un collecteur de gaz d'échappement (12a, 12b) monté sur une bride, et au moins pour la sortie des gaz, il y a deux collecteurs de gaz d'échappement (12a, 12b) distincts qui réunissent les canaux de sortie respectifs (11) d'au moins deux des cylindres (1 et 4, 2 et 3),
**caractérisée en ce que**
le canal longitudinal (13) est divisé en un certain nombre de sous-canaux (13a, 13b), dont le nombre est le même que le nombre des collecteurs de gaz d'échappement (12a, 12b),
les sorties de gaz respectives de la vanne (17), ont des sous-canaux distincts (13a, 13b) vers les collecteurs de gaz d'échappement individuels (12a, 12b) de façon que chaque sous-canal (13a, 13b) fournisse aux collecteurs d'échappement (12a, 12b) de l'air secondaire par l'intermédiaire des canaux de gaz d'échappement (11) reliés aux cylindres.

2. Culasse selon la revendication 1,
**caractérisée en ce que**
le canal longitudinal (13) est divisé en des sous-canaux (13a, 13b) par un élément formant insert (18).

3. Culasse selon la revendication 2,
**caractérisée en ce que**
l'élément formant insert (18) se compose d'une conduite (18) espacée et séparée selon sa longueur par rapport à la paroi (19) du canal longitudinal (13) de façon que le premier sous-canal (13a) s'étende pratiquement à l'intérieur de la conduite et que le second sous-canal (13b) corresponde au moins à la section de l'espace compris entre la paroi de la conduite et la paroi du canal longitudinal (13).

4. Culasse selon la revendication 3 d'un moteur à combustion interne à quatre cylindres selon lequel les canaux d'échappement (11) du premier et du quatrième cylindre (1 et 4) et les canaux d'échappement (11) du second et du troisième cylindre (2 et 3) sont réunis, et
la vanne (17) est reliée à un premier canal en prise (16a) et à un second canal raccordés (16b),
**caractérisée en ce que**
la conduite (18) occupe la longueur du canal longitudinal (13) et dans la région comprise entre le premier et le second cylindre (1 et 2) et celle entre le troisième et le quatrième cylindre (3 et 4), on a respectivement des colliers d'étanchéité (201, 20r) s'étendant sur la paroi (19) du canal longitudinal (13), et
le second canal (16b) de la vanne (17) aboutit à la région située entre les deux colliers (201, 20r) dans le canal longitudinal (13), et
le premier des deux canaux raccordés (16a) relie la vanne (17) au canal longitudinal (13) dans la région du premier ou du quatrième cylindre (1 ou 4), et
dans cette région, comme dans l'autre région d'extrémité de la conduite (18), au moins un orifice d'échange (21) est réalisé dans la paroi de la conduite.
